# EUROPEAN PATENT APPLICATION

(11) **EP 4 650 868 A1**
(43) Date of publication of application: **19.11.2025**
(21) Application number: 25176596.2
(22) Date of filing: 15.05.2025
(51) Int. Cl.: G03B 21/20

(54) **LIGHT SOURCE DEVICE AND PROJECTOR**

(30) Priority: 17.05.2024 JP 2024081163
(71) Applicant: Seiko Epson Corporation, Tokyo 160-8801 (JP)
(72) Inventor: NAGAI, Takumi, Suwa-shi, 392-8502 (JP); TAKAI, Ryota, Suwa-shi, 392-8502 (JP)
(74) Representative: Lewis Silkin LLP

(57) **Abstract**

A light source device according to the present disclosure includes a light source unit including first and second light emitting elements, a substrate, and first and second metal wires, a light guide member on which light from the light source unit is incident, and a support member including a support groove. The light guide member has a first surface that emits light, a second surface opposite to the first surface, third and fourth surfaces facing opposite to each other, and fifth and sixth surfaces facing opposite to each other. In the light source unit, each light emitting element faces the third surface, the support groove includes a support surface facing the fourth surface and supporting the light guide member, and a first wall surface at a distance from the fifth surface, defining a first axis, a second axis perpendicular to the first axis, and a third axis perpendicular to the first and second axes, in a plan view along the third axis, each light emitting element has a rectangular outer shape, outer circumferential sides of the light emitting elements cross the first and second axes, first and second wiring terminals are located between the fifth surface and a first wall surface, and the first wall surface extends toward the light source unit beyond the third surface of the light guide member.

## Description

The present application is based on, and claims priority from JP Application Serial Number 2024-081163, filed May 17, 2024, the disclosure of which is hereby incorporated by reference herein in its entirety.

### BACKGROUND

### 1. Technical Field

The present disclosure relates to a light source device and a projector.

### 2. Related Art

As a light source device used in a projector, there has been proposed a light source device using fluorescence emitted from a phosphor when the phosphor is irradiated with excitation light emitted from a light emitting element. WO 2020/254455 discloses a light source device including an excitation light source in which a plurality of light emitting elements is mounted on a circuit board, a phosphor rod that converts excitation light emitted from each of the light emitting elements of the excitation light source into fluorescence, and a holder that holds the phosphor rod. In the past, when a plurality of light emitting elements is mounted on a circuit board, metallic lines shaped like wires are used as devices for electrically coupling the circuit board and the light emitting elements to each other.

WO 2020/254455 is an example of the related art.

In the light source device disclosed in WO 2020/254455, when the metal lines described above are used, there arises a necessity that the holder and the circuit board are arranged in a separate state so that the metal lines and the holder do not come into contact with each other. Therefore, there is a possibility that light emitted from the light emitting element or light which is emitted from the light emitting element and fails to enter the phosphor rod but is reflected by the phosphor rod leaks through a gap between the circuit board and an upper surface of the holder to thereby decrease the light use efficiency.

### SUMMARY

In view of the problems described above, a light source device according to an aspect of the present disclosure includes a light source unit including a first light emitting element and a second light emitting element configured to emit light, a substrate on which the first light emitting element and the second light emitting element arranged along a first axis are mounted, a first metal wire configured to electrically couple the first light emitting element and a first wiring terminal of the substrate, and a second metal wire configured to electrically couple the second light emitting element and a second wiring terminal of the substrate,
a light guide member which has an elongated shape along the first axis and on which the light emitted from the first light emitting element and the second light emitting element is incident, and
a support member configured to support the light guide member, wherein
the light guide member includes a first surface configured to emit light, a second surface located at an opposite side to the first surface in a direction along the first axis, a third surface and a fourth surface which cross the first surface and the second surface and are located at respective sides opposite to each other, and a fifth surface and a sixth surface which cross the first surface and the second surface, which cross the third surface and the fourth surface, and which are located at respective sides opposite to each other,
the light source unit is disposed such that the first light emitting element and the second light emitting element are opposed to the third surface of the light guide member,
the support member includes
a support surface which is opposed to the fourth surface, and is configured to support the light guide member, and
a first side wall which crosses the support surface, and is located at a distance from the fifth surface of the light guide member,
when an axis orthogonal to the first axis in the third surface is defined as a second axis, and an axis orthogonal to the first axis and the second axis is defined as a third axis,

in a plan view in a direction along the third axis,
the first light emitting element and the second light emitting element each have a rectangular outer shape, outer circumferential lines of the first light emitting element and the second light emitting element cross the first axis and the second axis,
the first wiring terminal and the second wiring terminal of the substrate are located between the fifth surface and the first side wall, and
in a plan view in a direction along the first axis,
the first side wall extends toward the light source unit beyond the third surface of the light guide member.

A projector according to an aspect of the present disclosure includes the light source device according to the aspect of the present disclosure, a light modulation device configured to modulate the light emitted from the light source device in accordance with image information, and a projection optical device configured to project the light modulated by the light modulation device.

### BRIEF DESCRIPTION OF THE DRAWINGS

FIG. 1 is a diagram showing a schematic configuration of a projector according to an embodiment.
FIG. 2 is a schematic configuration diagram of a first illumination device.
FIG. 3 is a plan view showing a schematic configuration of a light source unit.
FIG. 4 is a diagram showing a state in which the light emitting element is rotated and a state in which the light emitting element is not rotated in comparison with each other.
FIG. 5 is a plan view of a support member viewed from a Y-axis direction.
FIG. 6 is a plan view showing a configuration of an essential part of a light source device viewed from the Y-axis direction.
FIG. 7 is a cross-sectional view of the light source device along the line VII-VII in FIG. 6.
FIG. 8 is a cross-sectional view showing a configuration of a light source device according to a comparative example.
FIG. 9 is a cross-sectional view of a light source device according to a first modified example.
FIG. 10 is a plan view of a light source device according to a second modified example viewed from the Y-axis direction.

### DESCRIPTION OF EMBODIMENTS

An embodiment of the present disclosure will be described below.

A projector according to the present embodiment is an example of a projector using liquid crystal panels as light modulation devices.

In the following drawings, elements are drawn at different dimensional scales in some cases in order to make the elements eye-friendly.

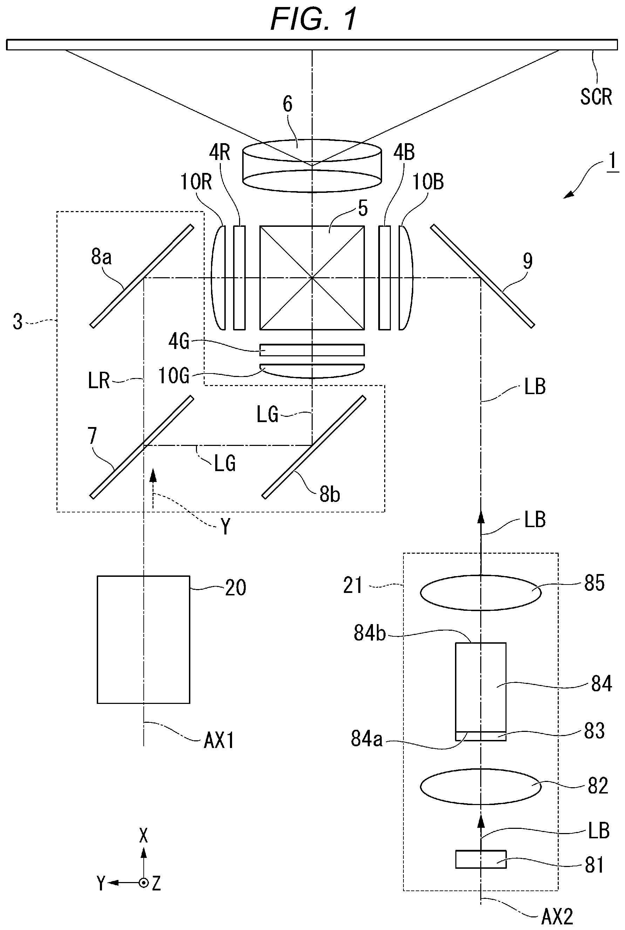

FIG. 1 is a diagram showing a schematic configuration of a projector 1 according to the present embodiment.

As shown in FIG. 1, the projector 1 according to the present embodiment is a projection-type image display apparatus that displays a color image on a screen SCR as a projection target surface. The projector 1 includes three light modulation devices corresponding respectively to color light beams, namely red light LR, green light LG, and blue light LB.

The projector 1 includes a first illumination device 20, a second illumination device 21, a color separation optical system 3, a light modulation device 4R, a light modulation device 4G, a light modulation device 4B, a light combining element 5, and a projection optical device 6.

The first illumination device 20 outputs yellow fluorescence Y toward the color separation optical system 3. The second illumination device 21 emits the blue light LB toward the light modulation device 4B. Detailed configurations of the first illumination device 20 and the second illumination device 21 will be described later.

The description with reference to the drawings will hereinafter be made using an X-Y-Z orthogonal coordinate systemin as needed. The Z axis is an axis extending along a vertical direction of the projector 1. The X axis is an axis parallel to an optical axis AX1 of the first illumination device 20 and an optical axis AX2 of the second illumination device 21. The Y axis is an axis perpendicular to the X axis and the Z axis. The optical axis AX1 of the first illumination device 20 is the central axis of the fluorescence Y emitted from the first illumination device 20. The optical axis AX2 of the second illumination device 21 is a central axis of the blue light LB emitted from the second illumination device 21. One direction along the X axis is referred to a +X direction, the opposite direction thereof is referred to as a -X direction, one direction along the Y axis is referred to as a +Y direction, the opposite direction thereof is referred to as a -Y direction, one direction along the Z axis is referred to as a +Z direction, and the opposite direction thereof is referred to as a -Z direction. Further, the two directions along the X axis are collectively referred to as an X-axis direction without being distinguished from each other, the two directions along the Y axis are collectively referred to as a Y-axis direction without being distinguished from each other, and the two directions along the Z axis are collectively referred to as a Z-axis direction without being distinguished from each other.

The color separation optical system 3 separates the yellow fluorescence Y emitted from the first illumination device 20 into the red light LR and the green light LG. The color separation optical system 3 includes a dichroic mirror 7, a first reflecting mirror 8a, and a second reflecting mirror 8b.

The dichroic mirror 7 separates the fluorescence Y into the red light LR and the green light LG. The dichroic mirror 7 transmits the red light LR and reflects the green light LG. The second reflecting mirror 8b is disposed in the light path of the green light LG. The second reflecting mirror 8b reflects the green light LG, which is reflected by the dichroic mirror 7, toward the light modulation device 4G. The first reflecting mirror 8a is disposed in the light path of the red light LR. The first reflecting mirror 8a reflects the red light LR, which has passed through the dichroic mirror 7, toward the light modulation device 4R.

In contrast, the blue light LB emitted from the second illumination device 21 is reflected by a reflecting mirror 9 toward the light modulation device 4B.

The second illumination device 21 includes a second light source 81, a condenser lens 82, a diffuser plate 83, a rod lens 84, and a relay lens 85. The second light source 81 is formed of at least one semiconductor laser. The second light source 81 emits the blue light LB formed of a laser beam. Note that the second light source 81 is not necessarily formed of a semiconductor laser and may be formed of an LED that emits blue light.

The condenser lens 82 is formed of a convex lens. The condenser lens 82 causes the blue light LB emitted from the second light source 81 to enter the diffuser plate 83 in a state of being substantially converged thereon. The diffuser plate 83 diffuses the blue light LB emitted from the condenser lens 82 at a predetermined degree of diffusion to generate the blue light LB having a substantially uniform light distribution similar to that of the fluorescence Y emitted from the first illumination device 20. As the diffuser plate 83, for example, ground glass made of optical glass is used.

The blue light LB diffused by the diffuser plate 83 enters the rod lens 84. The rod lens 84 has a prismatic shape extending along the direction of the optical axis AX2 of the second illumination device 21. The rod lens 84 has an end plane of incidence of light 84a disposed at one end and a light exit end surface 84b disposed at the other end. The diffuser plate 83 is fixed to the end plane of incidence of light 84a of the rod lens 84 via an optical adhesive (not shown). It is desirable that the refractive index of the diffuser plate 83 matches as much as possible with the refractive index of the rod lens 84.

The blue light LB propagates through the interior of the rod lens 84 while being totally reflected therein to thereby be emitted from the light exit end surface 84b in a state in which the uniformity of the illuminance distribution is enhanced. The blue light LB emitted from the rod lens 84 enters the relay lens 85. The relay lens 85 causes the blue light LB, the illuminance distribution of which is enhanced in uniformity by the rod lens 84, to enter the reflecting mirror 9.

The light exit end surface 84b of the rod lens 84 has a rectangular shape substantially similar to the shape of an image formation region of the light modulation device 4B. Thus, the blue light LB emitted from the rod lens 84 is efficiently incident on the image formation region of the light modulation device 4B.

The light modulation device 4R modulates the red light LR in accordance with image information to form image light corresponding to the red light LR. The light modulation device 4G modulates the green light LG in accordance with the image information to form image light corresponding to the green light LG. The light modulation device 4B modulates the blue light LB in accordance with the image information to form image light corresponding to the blue light LB.

As each of the light modulation devices 4R, 4G, and 4B, there is used, for example, a transmissive liquid crystal panel. Polarization plates (not shown) are disposed at light incident side and light exit side of the liquid crystal panel, respectively. The polarization plates only transmit linearly polarized light polarized in a specific direction.

At the incident side of the light modulation device 4R, there is disposed a field lens 10R. At the incident side of the light modulation device 4G, there is disposed a field lens 10G. At the incident side of the light modulation device 4B, there is disposed a field lens 10B. The field lens 10R collimates a principal ray of the red light LR to be incident on the light modulation device 4R. The field lens 10G collimates a principal ray of the green light LG to be incident on the light modulation device 4G. The field lens 10B collimates a principal ray of the blue light LB to be incident on the light modulation device 4B.

Upon incidence of the image light emitted from the light modulation device 4R, the image light emitted from the light modulation device 4G, and the image light emitted from the light modulation device 4B, the light combining element 5 combines the image light corresponding to the red light LR, the green light LG, and the blue light LB to output the image light thus combined toward the projection optical device 6. As the light combining element 5, there is used, for example, a cross dichroic prism.

The projection optical device 6 is configured with a plurality of projection lenses. The projection optical device 6 projects the image light synthesized by the light combining element 5 toward the screen SCR in an enlarged manner. Thus, a color image is displayed on the screen SCR.

Then, a configuration of the first illumination device 20 will be described.

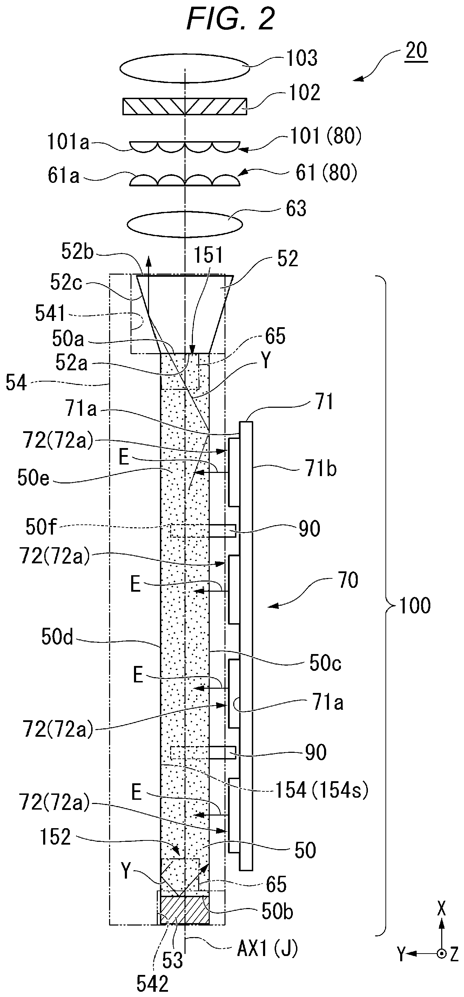

FIG. 2 is a schematic configuration diagram of the first illumination device 20.

The first illumination device 20 includes a light source device 100, a collimating optical system 63, an integrator optical system 80, a polarization conversion element 102, and a superimposing optical system 103, as shown in FIG. 2.

The light source device 100 includes a wavelength conversion member 50, a light source unit 70, an angle conversion member 52, a mirror 53, a support member 54, a position restriction unit 65, and a pair of pressing members 90. The wavelength conversion member 50 in the present embodiment corresponds to a "light guide member" in the appended claims.

The wavelength conversion member 50 has a quadrangular prismatic shape extending along the X axis and has six surfaces. The sides of the wavelength conversion member 50 extending along the X axis are longer than the sides thereof extending along the Y axis and the sides thereof extending along the Z axis. Therefore, the X axis corresponds to the longitudinal direction of the wavelength conversion member 50. The length of the sides extending along the Y axis is equal to the length of the sides extending along the Z axis. That is, a cross-sectional shape of the wavelength conversion member 50 cut by a plane along the Y-Z plane perpendicular to the X axis is a square shape. Note that the cross-sectional shape of the wavelength conversion member 50 cut by the plane along the Y-Z plane may be a rectangular shape. In the present embodiment, the X axis corresponds to a "first axis" in the appended claims, the Y axis corresponds to a "third axis" in the appended claims, and the Z axis corresponds to a "second axis" in the appended claims.

The wavelength conversion member 50 has a first surface 50a and a second surface 50b, a third surface 50c and a fourth surface 50d, and a fifth surface 50e and a sixth surface 50f. The first surface 50a and the second surface 50b cross the X axis extending along the longitudinal direction of the wavelength conversion member 50 and are located at respective sides opposite to each other in the X axis. In the present embodiment, the first surface 50a is located at the +X side which is one of the X-axis directions along the X axis, and the second surface 50b is located at the -X side which is the opposite direction of the X-axis directions.

The third surface 50c and the fourth surface 50d cross each of the first surface 50a and the second surface 50b, and are located at respective sides opposite to each other in the Y axis which crosses, is perpendicular to in the case of the present embodiment, the X axis along the longitudinal direction of the wavelength conversion member 50. In the present embodiment, the third surface 50c is located at the -Y side which is one of the Y-axis directions along the Y axis, and the fourth surface 50d is located at the +Y side which is the other of the Y-axis directions.

The fifth surface 50e and the sixth surface 50f cross each of the first surface 50a and the second surface 50b, and cross each of the third surface 50c and the fourth surface 50d, and are located at respective sides opposite to each other in the Z axis which crosses (is perpendicular to, in the present embodiment) the X axis and the Y axis.

In the present embodiment, the fifth surface 50e is located at the +Z direction side which is a side in one of the Z-axis directions, and the sixth surface 50f is located at the -Z direction side which is a side in the other of the Z-axis directions.

In the following description, the third surface 50c, the fourth surface 50d, the fifth surface 50e, and the sixth surface 50f may be simply referred to as side surfaces 50c, 50d, 50e, and 50f in some cases when they are not distinguished from each other.

The wavelength conversion member 50 at least includes a phosphor, and converts excitation light E which is emitted from the light source unit 70 and has a first wavelength band into the fluorescence Y which has a second wavelength band different from the first wavelength band. The excitation light E enters the wavelength conversion member 50 via the third surface 50c. The fluorescence Y is guided through the interior of the wavelength conversion member 50 and is then emitted from the first surface 50a. The excitation light E in the present embodiment corresponds to "first light" in the appended claims. The fluorescence Y in the present embodiment corresponds to "second light" in the appended claims.

The wavelength conversion member 50 includes a ceramic phosphor formed of a polycrystalline phosphor that performs the wavelength conversion on the excitation light E into the fluorescence Y. The second wavelength band provided to the fluorescence Y is a yellow wavelength band ranging, for example, from 490 to 750 nm. That is, the fluorescence Y is yellow fluorescence containing a red light component and a green light component.

The wavelength conversion member 50 may include a single crystal phosphor instead of the polycrystalline phosphor. Alternatively, the wavelength conversion member 50 may be formed of fluorescent glass. Alternatively, the wavelength conversion member 50 may be configured with a material obtained by dispersing a large number of phosphor particles in a binder made of glass or resin. The wavelength conversion member 50 made of such a material as described above converts the excitation light E into the fluorescence Y.

Specifically, the material of the wavelength conversion member 50 includes, for example, an yttrium-aluminum-garnet-based (YAG-based) phosphor. Consider YAG:Ce, which contains cerium (Ce) as an activator, by way of example, and the wavelength conversion member 50 is made, for example, of a material produced by mixing raw powder materials containing Y₂O₃, Al₂O₃, CeO₃, and other constituent elements with one another and causing the mixture to go through a solid-phase reaction, Y-Al-O amorphous particles produced by using a coprecipitation method, a sol-gel method, or any other wet method, or YAG particles produced by using a spray-drying method, a flame-based thermal decomposition method, a thermal plasma method, or any other gas-phase method.

The light source unit 70 includes a substrate 71 and a plurality of light emitting elements 72. The substrate 71 includes an obverse surface 71a and a reverse surface 71b opposite to the obverse surface 71a.

The plurality of light emitting elements 72 is disposed on the obverse surface 71a of the substrate 71. The light source unit 70 in the present embodiment has four light emitting elements 72, but the number of light emitting elements 72 is not particularly limited.

Each of the light emitting elements 72 has a light emitting surface 72a which is opposed to the third surface 50c of the wavelength conversion member 50, and emits the excitation light E in the first wavelength band toward the third surface 50c. The first wavelength band is, for example, a blue-violet wavelength band in a range of 400 nm to 480 nm, and a peak wavelength is, for example, 445 nm.

As described above, each of the light emitting elements 72 of the light source unit 70 is disposed so that the light emitting surface 72a is opposed to the third surface 50c, which is one of the four side surfaces 50c, 50d, 50e, and 50f extending along the longitudinal direction of the wavelength conversion member 50.

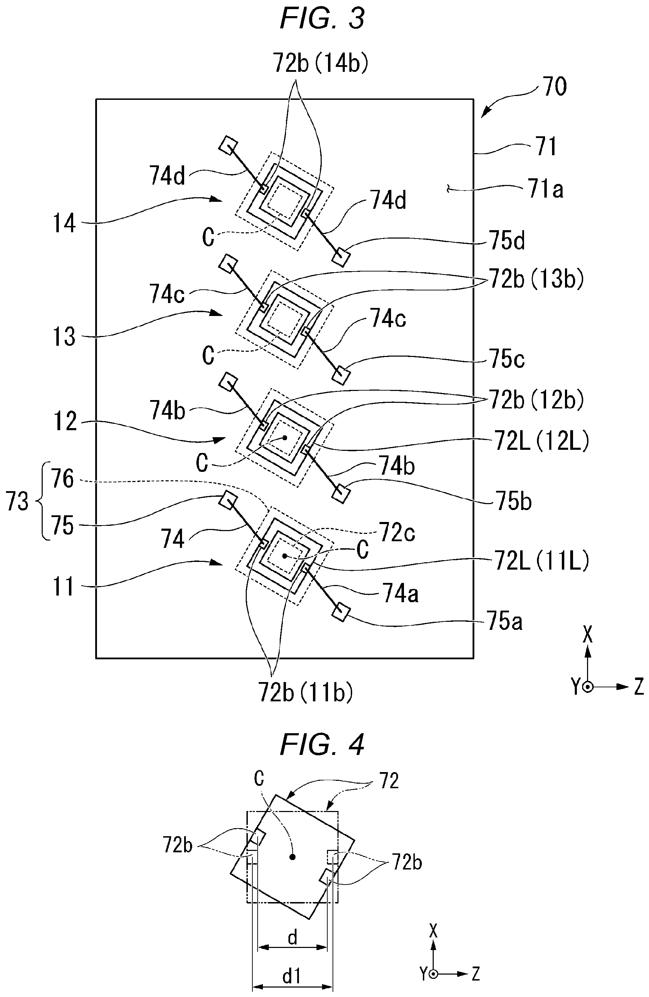

FIG. 3 is a plan view showing a schematic configuration of the light source unit 70. FIG. 3 is a plan view of the obverse surface 71a of the substrate 71 of the light source unit 70.

As shown in FIG. 3, the substrate 71 has a substantially rectangular shape. The plurality of light emitting elements 72 is arranged along the X-axis direction on the obverse surface 71a of the substrate 71.

The light emitting elements 72 are each formed of, for example, a light emitting diode (LED) and all have the same structure. The light emitting elements 72 each include the light emitting surface 72a, two anode electrodes 72b, and a single cathode electrode 72c. In each of the light emitting elements 72, the light emitting surface 72a and the two anode electrodes 72b are disposed on an obverse surface facing to an opposite side to the substrate 71, and the cathode electrode 72c is disposed on a reverse surface facing to the substrate 71 side opposite to the obverse surface. Since each of the light emitting elements 72 includes the two anode electrodes 72b disposed so as to sandwich the light emitting surface 72a in the present embodiment, the density of a current supplied to the light emitting surface 72a is stabilized, and thus it is possible to make the light emitting surface 72a uniformly emit light. Accordingly, each of the light emitting elements 72 can emit uniform and bright light from the light emitting surface 72a.

Terminal parts 73 electrically coupled to the respective light emitting elements 72 are disposed on the obverse surface 71a of the substrate 71. The terminal parts 73 each include first conduction parts 75 electrically coupled to the anode electrodes 72b of each of the light emitting elements 72, and a second conduction part 76 electrically coupled to the cathode electrode 72c of each of the light emitting elements 72. The first conduction parts 75 and the second conduction parts 76 are configured to couple the plurality of light emitting elements 72 in series. Therefore, a current sequentially flows between a first light emitting element 11, a second light emitting element 12, a third light emitting element 13, and a fourth light emitting element 14 along the X-axis direction.

Specifically, the anode electrodes 72b of each of the light emitting elements 72 are coupled to the first conduction parts 75 of the terminal part 73 via metal wires 74, respectively. Note that the metal wires 74 are provided by a wire bonding apparatus. Further, each of the light emitting elements 72 is mounted in a direction in which the cathode electrode 72c is placed on the second conduction part 76 of the terminal part 73. Noted that a solder layer, for example, is disposed between the cathode electrode 72c and the second conduction part 76.

The terminal part 73 is coupled to a wiring part (not illustrated), and the plurality of light emitting elements 72 is electrically coupled to an external device via the plurality of metal wires 74, the terminal parts 73, and the wiring part, so as to be able to be supplied with driving power or the like.

In this way, in each of the light emitting elements 72, conduction between the substrate 71 and the light emitting element 72 can easily and accurately be achieved via the metal wires 74.

In a plan view in the Y-axis direction along the normal line of the obverse surface 71a of the substrate 71, each of the light emitting elements 72 has the same rectangular (square, in the present embodiment) outer shape. Four outer circumferential sides 72L of each of the light emitting elements 72 cross the X axis and the Z axis but do not extend along the X axis or the Z axis. That is, each of the light emitting elements 72 is disposed in a state of being rotated around the central axis C. The central axis C is an axis which extends along the Y-axis direction and passes through the center of the light emitting surface 72a.

Each of the light emitting elements 72 is disposed in a state of being rotated in the same direction and by the same angle around the central axis C. The rotation angle of each of the light emitting elements 72 is preferably set to, for example, 20° to 40°, and more preferably set to 25° to 35°.

Here, when the rotation angle is larger than 40°, the proportion of one light emitting element 72 in the X-axis direction along the longitudinal direction of the wavelength conversion member 50 becomes large. As a result, there is a possibility that the number of light emitting elements 72 that can be arranged in the X-axis direction is reduced, and thus an amount of the excitation light E emitted is reduced. In addition, when the rotation angle is smaller than 20°, there is a possibility that the metal wire and the support member 54 come into contact with each other since the metal wire and the support member 54 are arranged in a state of being adjacent to each other.

In the case of the present embodiment, each of the light emitting elements 72 is disposed in a state of being rotated by 30° clockwise around the central axis C in a state of the plan view of the obverse surface 71a of the substrate 71. According to this configuration, the arrangement space of the light emitting elements 72 on the substrate 71 can be reduced.

Here, a difference between when the light emitting element 72 is rotated and when the light emitting element 72 is not rotated will be described.

FIG. 4 is a diagram showing a state in which the light emitting element 72 is rotated and a state in which the light emitting element 72 is not rotated in comparison with each other. In FIG. 4, the state in which the light emitting element 72 is rotated is indicated by a solid line, and the state in which the light emitting element 72 is not rotated is indicated by a two-dot chain line.

As shown in FIG. 4, in the light emitting element 72, one of the pair of anode electrodes 72b is located at the -Z side across the central axis C, and the other of the pair of anode electrodes 72b is located at the +Z side across the central axis C. Therefore, when the light emitting element 72 is rotated around the central axis C, the pair of anode electrodes 72b also rotate around the central axis C. Therefore, each of the pair of anode electrodes 72b comes closer to the central axis C in the Z-axis direction. That is, when the light emitting element 72 is rotated, the positions of the pair of anode electrodes 72b can be disposed closer to the central side in the Z-axis direction of the substrate 71 compared to a configuration in which the light emitting element 72 is not rotated, and therefore the distance d between the anode electrodes 72b in the Z-axis direction when the light emitting element 72 is rotated is shorter than the distance d1 between the anode electrodes 72b in the Z-axis direction when the light emitting element 72 is not rotated.

The light source unit 70 of the present embodiment can adopt a structure in which the first conduction parts 75 of the terminal part 73 coupled to the anode electrodes 72b are also shifted to the central side of the substrate 71 by shifting the anode electrodes 72b to the central side of the substrate 71. That is, the distance between the first conduction parts 75 in the Z-axis direction can be made shorter than when the light emitting element 72 is not rotated.

In the present specification, the plurality of light emitting elements 72 arranged in the X-axis direction on the substrate 71 is referred to as the first light emitting element 11, the second light emitting element 12, the third light emitting element 13, and the fourth light emitting element 14. In FIGS. 2 and 3, the first light emitting element 11, the second light emitting element 12, the third light emitting element 13, and the fourth light emitting element 14 are disposed in this order from the -X side toward the +X side.

The first conduction parts 75 include a plurality of wiring terminals electrically coupled to the anode electrodes 72b of the first light emitting element 11, the second light emitting element 12, the third light emitting element 13, and the fourth light emitting element 14. The plurality of wiring terminals includes first wiring terminals 75a, second wiring terminals 75b, third wiring terminals 75c, and fourth wiring terminals 75d.

The first wiring terminals 75a are respectively disposed on both sides of the first light emitting element 11 in the Z-axis direction. The second wiring terminals 75b are respectively disposed on both sides of the second light emitting element 12 in the Z-axis direction. The third wiring terminals 75c are respectively disposed on both sides of the third light emitting element 13 in the Z-axis direction. The fourth wiring terminals 75d are respectively disposed on both sides of the fourth light emitting element 14 in the Z-axis direction.

The plurality of metal wires 74 includes first metal wires 74a, second metal wires 74b, third metal wires 74c, and fourth metal wires 74d.

The first metal wire 74a electrically couples the anode electrode 11b of the first light emitting element 11 and the first wiring terminal 75a of the substrate 71.

The second metal wire 74b electrically couples the anode electrode 12b of the second light emitting element 12 and the second wiring terminal 75b of the substrate 71.

The third metal wire 74c electrically couples the anode electrode 13b of the third light emitting element 13 and the third wiring terminal 75c of the substrate 71.

The fourth metal wire 74d electrically couples the anode electrode 14b of the fourth light emitting element 14 and the fourth wiring terminal 75d of the substrate 71.

Going back to FIG. 2, the light source unit 70 is disposed to the support member 54 such that the plurality of light emitting elements 72 including the first light emitting element 11 and the second light emitting element 12 is opposed to the third surface 50c of the wavelength conversion member 50.

The support member 54 has a support groove 154 that extends in the X-axis direction along the longitudinal direction of the wavelength conversion member 50 and supports the wavelength conversion member 50. The support member 54 diffuses and releases, to the outside, the heat generated by the wavelength conversion member 50 supported in the support groove 154. It is therefore desirable for the support member 54 to be formed of a material that has predetermined strength and is high in thermal conductivity. It is desirable to use metal such as aluminum or stainless steel, in particular, an aluminum alloy such as a 6061 aluminum alloy as the material of the support member 54.

The wavelength conversion member 50 in the present embodiment includes a first protruding portion 151 which protrudes in the +X direction from the support groove 154, and a second protruding portion 152 which protrudes in the -X direction from the support groove 154. That is, the wavelength conversion member 50 in the present embodiment is in a state in which a part thereof protrudes to the outside of the support groove 154.

The position restriction unit 65 holds the first protruding portion 151 and the second protruding portion 152 in the wavelength conversion member 50. The position restriction unit 65 restricts the position of the wavelength conversion member 50 with respect to the support member 54 in cooperation with the pair of pressing members 90.

The pair of pressing members 90 are disposed so as to be opposed to a support surface 154s of the support groove 154. Thus, the pair of pressing members 90 restrict the movement of the wavelength conversion member 50 in the Y-axis direction in the support groove 154. The pair of pressing members 90 are made of an elastically deformable material. As an example, the pair of pressing members 90 are each formed of a leaf spring made of a metal material, and is formed of stainless steel such as SUS304.

The pair of pressing members 90 are disposed between the wavelength conversion member 50 and the substrate 71 and press the wavelength conversion member 50 against the support surface 154s of the support groove 154 of the support member 54. The pair of pressing members 90 are fixed to the support member 54. The pair of pressing members 90 are arranged so as to overlap gaps each disposed between the light emitting elements 72 arranged side by side in the X-axis direction in a plan view. Therefore, the pair of pressing members 90 do not overlap the light emitting surfaces 72a of the light emitting elements, and do not block the excitation light E emitted from the light emitting elements 72.

The mirror 53 is disposed on the second surface 50b of the wavelength conversion member 50. The mirror 53 reflects the fluorescence Y that has been guided through the interior of the wavelength conversion member 50 and has reached the second surface 50b. The mirror 53 is formed of a metal film or a dielectric multilayer film formed at the second surface 50b of the wavelength conversion member 50.

In the first illumination device 20, when the excitation light E emitted from the light source unit 70 enters the wavelength conversion member 50, the phosphor contained in the wavelength conversion member 50 is excited, and the fluorescence Y is emitted from random light emission points. The fluorescence Y travels omnidirectionally from the random light emission points, and the fluorescence Y traveling toward the four side surfaces 50c, 50d, 50e, and 50f travels toward the first surface 50a or the second surface 50b while repeating the total reflection at a plurality of places on the side surfaces 50c, 50d, 50e, and 50f. The fluorescence Y is guided and propagates through the interior of the wavelength conversion member 50 while being totally reflected, and exits via the first surface 50a. In the present embodiment, the fluorescence Y traveling toward the first surface 50a enters the angle conversion member 52 provided at the first surface 50a. The fluorescence Y traveling toward the second surface 50b is reflected by the mirror 53 and then travels toward the first surface 50a.

Out of the excitation light E having entered the wavelength conversion member 50, a part of the excitation light E that has not been used to excite the phosphor is reflected by members that are located around the wavelength conversion member 50, and include the light source unit 70, or the mirror 53 disposed on the second surface 50b. Therefore, the part of the excitation light E is confined in the wavelength conversion member 50 to be reused in the fluorescence conversion.

The angle conversion member 52 is disposed on the first surface 50a of the wavelength conversion member 50. The angle conversion member 52 is formed of, for example, a tapered rod. The angle conversion member 52 has a plane of incidence of light 52a, on which the fluorescence Y emitted from the wavelength conversion member 50 is incident, a light exit surface 52b, through which the fluorescence Y is emitted, and a side surface 52c which reflects the fluorescence Y incident thereon toward the light exit surface 52b.

The angle conversion member 52 has a truncated quadrangular pyramidal shape, and the cross-sectional area perpendicular to an optical axis J of the angle conversion member 52 increases toward a traveling direction of the light. Therefore, the area of a light exit surface 52b is larger than the area of a plane of incidence of light 52a. An axis which passes through the centers of the light exit surface 52b and the plane of incidence of light 52a, and is parallel to the X axis is defined as the optical axis J of the angle conversion member 52. Note that the optical axis J of the angle conversion member 52 coincides with the optical axis AX1 of the first illumination device 20.

The fluorescence Y having entered the angle conversion member 52 changes its orientation while traveling through the interior of the angle conversion member 52 so as to approximate to the direction parallel to the optical axis J every time the fluorescence Y is totally reflected by the side surface 52c. In such a manner, the angle conversion member 52 converts the exit angle distribution of the fluorescence Y emitted from the first surface 50a of the wavelength conversion member 50. Specifically, the angle conversion member 52 makes the maximum exit angle of the fluorescence Y at the light exit surface 52b smaller than the maximum incident angle of the fluorescence Y at the plane of incidence of light 52a.

In general, since the etendue of light defined by a product of the area of a light exit region and the largest exit angle as a solid angle of the light, is preserved, the etendue of the fluorescence Y is preserved before and after passing through the angle conversion member 52. As described above, the angle conversion member 52 has a configuration in which the area of the light exit surface 52b is made larger than the area of the plane of incident of light 52a. Therefore, from the viewpoint of the etendue preservation, the angle conversion member 52 can therefore make the maximum exit angle of the fluorescence Y at the light exit surface 52b smaller than the maximum incident angle of the fluorescence Y at the plane of incidence of light 52a.

The angle conversion member 52 is fixed to the wavelength conversion member 50 via an optical adhesive not shown so that the plane of incidence of light 52a is opposed to the first surface 50a of the wavelength conversion member 50. That is, the angle conversion member 52 and the wavelength conversion member 50 are in contact with each other via the optical adhesive, and an air gap such as an air layer is not disposed between the angle conversion member 52 and the wavelength conversion member 50. When an air gap is provided between the angle conversion member 52 and the wavelength conversion member 50, the fluorescence Y incident on the plane of incidence of light 52a of the angle conversion member 52 at an angle larger than or equal to the critical angle out of the fluorescence Y which reached the plane of incidence of light 52a is totally reflected by the plane of incidence of light 52a and cannot enter the angle conversion member 52. In contrast, when no air gap is provided between the angle conversion member 52 and the wavelength conversion member 50 as in the present embodiment, the amount of lost component of the fluorescence Y that cannot enter the angle conversion member 52 due to the total reflection can be reduced. From the viewpoint described above, it is desirable that the refractive index of the angle conversion member 52 and the refractive index of the wavelength conversion member 50 are made coincide with each other as precise as possible.

As the angle conversion member 52, a compound parabolic concentrator (CPC) may be used in place of the tapered rod. Substantially the same advantages as those when using the tapered rod can be obtained when using the CPC as the angle conversion member 52. It should be noted that the light source device 100 may not necessarily include the angle conversion member 52.

The collimating optical system 63 is formed of a collimator lens and so on, and is disposed between the light source device 100 and the integrator optical system 80. The collimating optical system 63 further narrows the angle distribution of the fluorescence Y emitted from the light source device 100 to make the fluorescence Y high in degree of parallelism enter the integrator optical system 80. It should be noted that the collimating optical system 63 may not be provided when the fluorescence Y emitted from the angle conversion member 52 is sufficiently high in degree of parallelism.

The integrator optical system 80 includes a first lens array 61 and a second lens array 101. The integrator optical system 80 functions as a homogenous illumination optical system that homogenizes the intensity distribution of the fluorescence Y emitted from the light source device 100 in each of the light modulation devices 4R, 4G, which are illumination target regions in cooperation with the superimposing optical system 103. The fluorescence Y emitted from the collimating optical system 63 enters the first lens array 61. Along with the second lens array 101 disposed in a posterior stage of the light source device 100, the first lens array 61 forms the integrator optical system 80.

The first lens array 61 includes a plurality of first small lenses 61a. The plurality of first small lenses 61a is arranged in a matrix in a plane parallel to the Y-Z plane perpendicular to the optical axis AX1 of the first illumination device 20. The plurality of first small lenses 61a divides the fluorescence Y emitted from the angle conversion member 52 into a plurality of partial fluxes. The first small lenses 61a each have a rectangular shape substantially similar to the shape of the image formation region of each of the light modulation devices 4R, 4G. Thus, the partial fluxes emitted from the first lens array 61 are each efficiently incident on the image formation region of each of the light modulation devices 4R, 4G.

The fluorescence Y emitted from the first lens array 61 travels toward the second lens array 101. The second lens array 101 is disposed so as to be opposed to the first lens array 61. The second lens array 101 includes a plurality of second small lenses 101a corresponding to the plurality of first small lenses 61a of the first lens array 61. The second lens array 101 forms images of the plurality of first small lenses 61a of the first lens array 61 in the vicinity of the image formation region of each of the light modulation devices 4R, 4G in cooperation with the superimposing optical system 103. The plurality of second small lenses 101a is arranged in a matrix in a plane parallel to the Y-Z plane perpendicular to the optical axis AX1 of the first illumination device 20.

The first small lenses 61a of the first lens array 61 and the second small lenses 101a of the second lens array 101 are the same in size as each other in the present embodiment, but may be different in size from each other. Further, the first small lenses 61a of the first lens array 61 and the second small lenses 101a of the second lens array 101 are arranged at positions where the optical axes thereof coincide with each other in the present embodiment, but may be arranged at positions where the optical axes thereof deviate from each other.

The polarization conversion element 102 converts the polarization direction of the fluorescence Y emitted from the second lens array 101. Specifically, the polarization conversion element 102 converts each of the partial fluxes of the fluorescence Y divided by the first lens array 61 and then emitted from the second lens array 101 into linearly polarized light.

The polarization conversion element 102 includes a polarization separation layer that is not shown, and that directly transmits one linear polarization component out of the polarization components provided in the fluorescence Y emitted from the light source device 100 and reflects the other linear polarization component toward a direction perpendicular to the optical axis AX1, a reflecting layer that is not shown, and that reflects the other linear polarization component reflected by the polarization separation layer, toward a direction parallel to the optical axis AX1, and a wave plate that is not shown, and that converts the other linear polarization component reflected by the reflecting layer into the one linear polarization component.

The fluorescence Y transmitted through the polarization conversion element 102 enters the superimposing optical system 103. The superimposing optical system 103 forms a homogenous illumination optical system that homogenizes the intensity distribution of the fluorescence Y in each of the light modulation devices 4R, 4G which are the illumination target regions in cooperation with the integrator optical system 80.

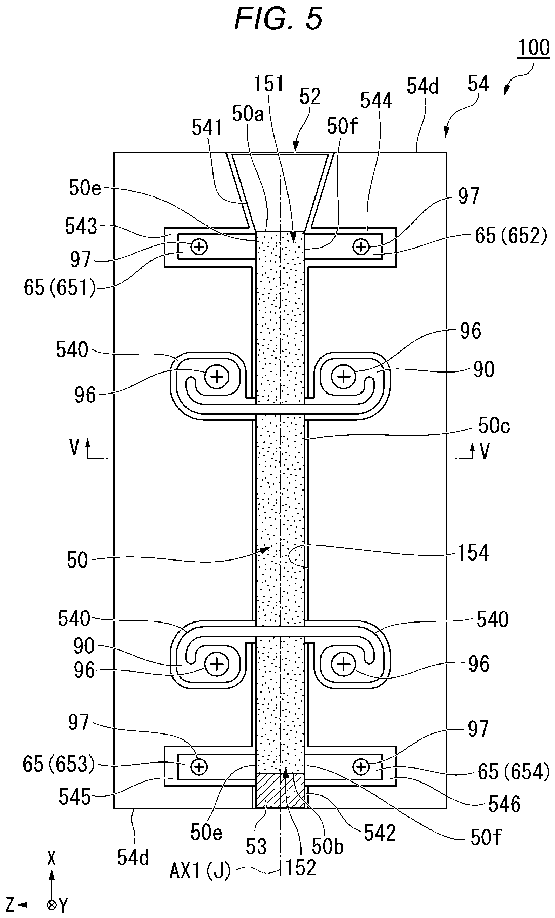

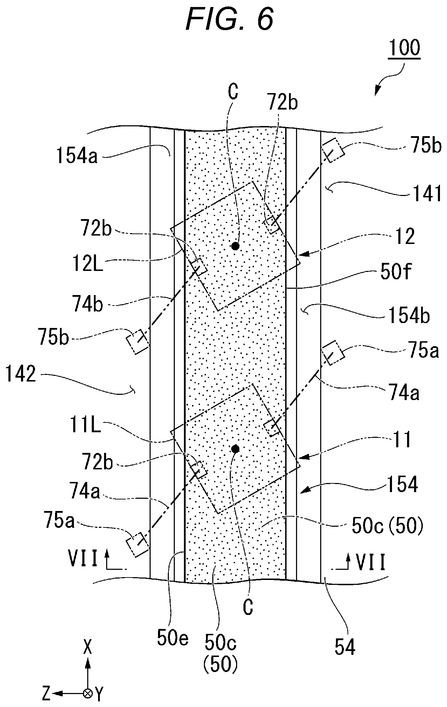

FIG. 5 is a plan view of the support member 54 viewed from the Y-axis direction. FIG. 6 is a plan view showing a configuration of an essential part of the light source device 100 viewed from the Y-axis direction. In FIG. 6, only the first light emitting element 11 and the second light emitting element 12 out of the elements of the light source unit 70 are shown in order to make the drawing eye-friendly.

As illustrated in FIG. 5, the support member 54 is a plate-like member which includes the support groove 154, spring fixation parts 540, a first housing portion 541, a second housing portion 542, a third housing portion 543, a fourth housing portion 544, a fifth housing portion 545, and a sixth housing portion 546, and has a rectangular planar shape.

As shown in FIG. 6, four outer circumferential sides 11L of the first light emitting element 11 cross the X axis and the Z axis but do not extend along the X axis or the Z axis. Similarly, four outer circumferential sides 12L of the second light emitting element 12 cross the X axis and the Z axis but do not extend along the X axis or the Z axis. That is, the first light emitting element 11 and the second light emitting element 12 are disposed in a state of being rotated around the central axis C.

In the present embodiment, at least a part of the anode electrode 11b of the first light emitting element 11 to which the first metal wire 74a is coupled and at least a part of the anode electrode 12b of the second light emitting element 12 to which the second metal wire 74b is coupled overlap the wavelength conversion member 50. According to this configuration, since the first light emitting element 11 and the second light emitting element 12 are disposed in a state of being sufficiently rotated, it is possible to realize a configuration in which the distance in the Z-axis direction between the first conduction parts 75 coupled to the respective anode electrodes 11b, 12b is shortened as illustrated in FIG. 4.

Note that in the present embodiment, the anode electrode 11b of the first light emitting element 11 corresponds to a "first electrode" in the appended claims, and the anode electrode 12b of the second light emitting element 12 corresponds to a "second electrode" in the appended claims.

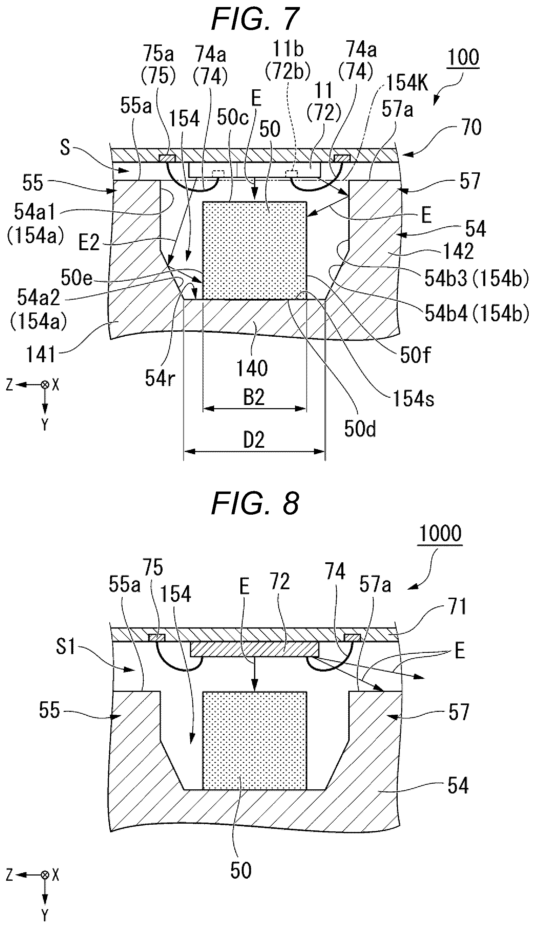

FIG. 7 is a cross-sectional view of the light source device 100 taken along the line VII-VII in FIG. 6. Note that in FIG. 7, the position restriction unit 65 and the pressing member 90 are not shown in order to make the drawing eye-friendly.

The support groove 154 of the support member 54 has a U-shaped cross section perpendicular to the X-axis direction, as shown in FIG. 7.

The support member 54 includes a bottom wall 140, a first side wall 141, and a second side wall 142. The bottom wall 140 has a support surface 154s forming a bottom surface of the support groove 154. In the case of the present embodiment, the support surface 154s is a surface parallel to the X-Z plane and supports the fourth surface 50d of the wavelength conversion member 50.

The first side wall 141 has a first wall surface 154a forming one side surface of the support groove 154. The first wall surface 154a is opposed to the fifth surface 50e of the wavelength conversion member 50 and is separated from the fifth surface 50e. That is, a gap is provided between the first wall surface 154a and the fifth surface 50e of the wavelength conversion member 50.

The first side wall 141 has a first top portion 55 forming an upper portion of the support groove 154. A first top surface 55a, which is a tip of the first top portion 55, is a surface parallel to the X-Z plane and is a surface the farthest from the support surface 154s in the Y-axis direction.

The second side wall 142 has a second wall surface 154b forming the other side surface of the support groove 154. The second wall surface 154b is opposed to the sixth surface 50f of the wavelength conversion member 50 and is separated from the sixth surface 50f. That is, a gap is provided between the second wall surface 154b and the sixth surface 50f of the wavelength conversion member 50.

The second side wall 142 has a second top portion 57 forming an upper portion of the support groove 154. A second top surface 57a, which is a tip of the second top portion 57, is a surface parallel to the X-Z plane and is a surface the farthest from the support surface 154s in the Y-axis direction.

The support groove 154 in the present embodiment has the support surface 154s, the first wall surface 154a, and the second wall surface 154b.

In a plan view in the X-axis direction, the first side wall 141 and the second side wall 142 extend toward the light source unit 70 beyond the third surface 50c of the wavelength conversion member 50.

The first wall surface 154a includes a first portion 54a1 located at the third surface 50c side, and a second portion 54a2 located at the support surface 154s side. The first portion 54a1 extends in a direction perpendicular to the support surface 154s, that is, in parallel to the X-Y plane. The second portion 54a2 inclines so as to approach the fifth surface 50e as extending from the first portion 54a1 side toward the support surface 154s. In other words, the distance between the second portion 54a2 and the fifth surface 50e at the support surface 154s side is shorter than the distance between the second portion 54a2 and the fifth surface 50e at the first portion 54a1 side.

The second wall surface 154b includes a third portion 54b3 located at the third surface 50c side, and a fourth portion 54b4 located at the support surface 154s side. The third portion 54b3 extends in a direction perpendicular to the support surface 154s, that is, in parallel to the X-Y plane. The fourth portion 54b4 inclines so as to approach the sixth surface 50f as extending from the third portion 54b3 side toward the support surface 154s. In other words, the distance between the fourth part 54b4 and the sixth surface 50f at the support surface 154s side is shorter than the distance between the fourth portion 54b4 and the sixth surface 50f at the third portion 54b3 side.

The first wall surface 154a and the second wall surface 154b are each formed of a surface of metal such as aluminum or stainless steel as the constituent material of the support member 54. More specifically, the first wall surface 154a and the second wall surface 154b are each formed of a processed surface obtained by performing a mirror finishing treatment on the metal surface described above. Therefore, the first wall surface 154a and the second wall surface 154b each have light reflectivity and reflect the excitation light E incident thereon. Note that the first wall surface 154a and the second wall surface 154b may each be formed of another metal film, or a dielectric multilayer film formed at the surface of the metal such as aluminum or stainless steel.

Going back to FIG. 6, the first wiring terminal 75a and the second wiring terminal 75b are located between the fifth surface 50e and the first wall surface 154a. Further, the first wiring terminal 75a and the second wiring terminal 75b are located between the sixth surface 50f and the second wall surface 154b of the second side wall 142.

Note that although not illustrated, the third wiring terminal 75c and the fourth wiring terminal 75d are located between the fifth surface 50e and the first wall surface 154a of the first side wall 141, and the third wiring terminal 75c and the fourth wiring terminal 75d are located between the sixth surface 50f and the second wall surface 154b of the second side wall 142.

The first metal wires 74a are respectively drawn in the -X direction in which the distance between the outer circumferential side 11L of the first light emitting element 11 and the first wall surface 154a increases, and in the +X direction in which the distance between the outer circumferential side 11L of the first light emitting element 11 and the second wall surface 154b increases. That is, the pair of first metal wires 74a are drawn so as to be point symmetrical with respect to the central axis C of the first light emitting element 11.

According to this configuration, since a space between the first metal wire 74a and the first wall surface 154a or the second wall surface 154b becomes easy to ensure, it is possible to prevent the first metal wire 74a and the first wall surface 154a or the second wall surface 154b from coming into contact with each other. In addition, the length of the first metal wire 74a can sufficiently be ensured.

Further, the second metal wires 74b are respectively drawn in the -X direction in which the distance between the outer circumferential side 12L of the second light emitting element 12 and the first wall surface 154a increases, and in the +X direction in which the distance between the outer circumferential side 12L of the second light emitting element 12 and the second wall surface 154b increases.

According to this configuration, since a space between the second metal wire 74b and the first wall surface 154a or the second wall surface 154b becomes easy to ensure, it is possible to prevent the second metal wire 74b and the first wall surface 154a or the second wall surface 154b from coming into contact with each other. In addition, the length of the second metal wire 74b can sufficiently be ensured.

Note that although not shown in FIG. 6, substantially the same as in the first metal wires 74a and the second metal wires 74b applies to the drawing directions of the third metal wires 74c from the third light emitting element 13 and the drawing directions of the fourth metal wires 74d from the fourth light emitting element 14.

Going back to FIG. 7, in a plan view in the X-axis direction, a part of the first metal wire 74a is located at the wavelength conversion member 50 side (+Y side) of an opening surface 154K of the support groove 154 in the support member 54. Note that the opening surface 154K is a virtual surface including the first top surface 55a and the second top surface 57a.

That is, a part of the first metal wire 74a is disposed in a state of entering the support groove 154. According to this configuration, the light source unit 70 and the support member 54 can be arranged in a state of being adjacent to each other. Therefore, since a gap S between the substrate 71 and the top surfaces 55a, 57a of the first side wall 141 and the second side wall 142 of the support member 54 is reduced, leakage of the excitation light E through the gap S can be reduced.

In addition, since the first metal wire 74a can be disposed in a loosened state, the tension of the first metal wire 74a can be prevented from becoming excessively high, and the stress applied to the coupling portion to the first metal wire 74a can be reduced. Therefore, a failure in coupling with the first metal wire 74a can be prevented from occurring.

Note that although not illustrated in FIG. 7, substantially the same applies to the second metal wire 74b, the third metal wire 74c, and the fourth metal wire 74d. That is, a part of each of the second metal wire 74b, the third metal wire 74c, and the fourth metal wire 74d is provided in a state of entering the support groove 154. Therefore, since the second metal wire 74b, the third metal wire 74c, and the fourth metal wire 74d can be coupled in a loosened state, it is possible to prevent a failure in coupling with the second metal wire 74b, the third metal wire 74c, and the fourth metal wire 74d from occurring.

Here, a light source device including a light source unit mounted on the substrate 71 in a state where each of the light emitting elements 72 is not rotated will be described as a comparative example. As described with reference to FIG. 4, in the light source unit in the comparative example in which the light emitting elements 72 are arranged in a state in which the light emitting elements 72 are not rotated, the distance between the first conduction parts 75 in the Z-axis direction is larger than that in the light source unit 70 in the present embodiment. Therefore, the length of the metal wire 74 in the Z-axis direction is longer than that of the light source unit 70 in the present embodiment.

FIG. 8 is a cross-sectional view showing a configuration of a light source device 1000 in the comparative example.

As shown in FIG. 8, in the light source device 1000 in the comparative example, the metal wire 74 does not fit in the support groove 154 in the Z-axis direction, and there is a possibility that the first top portion 55 and the second top portion 57 of the support member 54 come into contact with the metal wires 74. Therefore, in the light source device 1000 in the comparative example, it is necessary to avoid contact between the metal wires 74 and the first top portion 55 and the second top portion 57 by lowering the first top portion 55 and the second top portion 57. However, when the heights of the first top portion 55 and the second top portion 57 decrease, the gap S1 between the top surfaces 55a, 57a of the first top portion 55 and the second top portion 57, and the substrate 71 increases, and the excitation light E emitted from each of the light emitting elements 72 is emitted to the outside through the gap S1. Therefore, there is a possibility that the amount of the excitation light E incident on the wavelength conversion member 50 decreases.

In contrast, according to the light source device 100 related to the present embodiment, by arranging the light emitting elements 72 in the rotated state, the metal wires 74 are fitted in the support groove 154 in the Z-axis direction, and thus the first top portion 55 and the second top portion 57 do not come into contact with the metal wires 74. Therefore, in the light source device 100 according to the present embodiment, since the first top portion 55 and the second top portion 57 can be made higher than in the light source device 1000 according to the comparative example, the gap S between the top surfaces 55a, 57a of the first top portion 55 and the second top portion 57, and the substrate 71 can be reduced. Accordingly, it is possible to make it difficult for the excitation light E emitted from each of the light emitting elements 72 to be emitted to the outside through the gap S described above.

Going back to FIG. 7, in the light source device 100 according to the present embodiment, the width D2 along the Z-axis direction of the support surface 154s of the support member 54 is larger than the width B2 along the Z-axis direction of the wavelength conversion member 50. Thus, in the Z-axis direction, both the end portions of the support surface 154s protrude outside the fourth surface 50d of the wavelength conversion member 50. In other words, when the support surface 154s is viewed from the light emitting surface 72a along the Y-axis direction, a part of the support surface 154s overlaps the fourth surface 50d, and another part of the support surface 154s is exposed outside the fourth surface 50d. In this way, the support surface 154s has an exposed portion 54r exposed outside the wavelength conversion member 50.

According to the light source device 100 in the present embodiment, the excitation light E2 emitted from the light emitting surface 72a of the light emitting element 72 as partial excitation light E2 travels through the gap between the fifth surface 50e of the wavelength conversion member 50 and the first portion 54a1, and is then incident on the second portion 54a2, which inclines with respect to the support surface 154s. On this occasion, the excitation light E2 is reflected by the second portion 54a2 and is then incident on the fifth surface 50e of the wavelength conversion member 50. As described above, since the excitation light E2 passing through the gap between the fifth surface 50e of the wavelength conversion member 50 and the first wall surface 154a becomes easy to enter the fifth surface 50e, it is possible to reduce an amount of the excitation light E that is reflected by the support surface 154s and then returns toward the light source unit 51. Further, a part of the excitation light E is reflected by the first portion 54a1 which extends perpendicularly to the support surface 154s, and is then incident on the fifth surface 50e of the wavelength conversion member 50.

Thus, it is possible to realize the light source device 100 which is high in use efficiency of the excitation light E, and is easy to obtain the fluorescence Y having the desired intensity.

Going back to FIG. 5, the spring fixation parts 540 are disposed at both sides of the support groove 154 in the Z-axis direction along a transverse direction of the wavelength conversion member 50. The spring fixation parts 540 fix both end portions of the pair of pressing members 90 disposed in a state of straddling the wavelength conversion member 50 in the Z-axis direction with screws 96.

The first housing portion 541 is a recessed portion that communicates with +X direction side of the support groove 154. The first housing portion 541 penetrates up to an outer edge 54d of the support member 54. The first housing portion 541 houses the first protruding portion 151 of the wavelength conversion member 50 protruding from the support groove 154. Further, the first housing portion 541 holds the angle conversion member 52 fixed to the first surface 50a of the wavelength conversion member 50. In the present embodiment, the angle conversion member 52 fixed to the first surface 50a of the first protruding portion 151 is held by the support member 54.

The light exit surface 52b of the angle conversion member 52 housed in the first housing portion 541 is coplanar with the outer edge 54d of the support member 54 in the plan view.

The second housing portion 542 is a recessed portion that communicates with the -X direction side of the support groove 154. The second housing portion 542 penetrates up to the outer edge 54d of the support member 54. The second housing portion 542 houses the second protruding portion 152 of the wavelength conversion member 50 protruding from the support groove 154. The second housing portion 542 is disposed in a state of not communicating with the outer edge 54d of the support member 54. The second housing portion 542 houses the second protruding portion 152 of the wavelength conversion member 50 protruding from the support groove 154. In the present embodiment, the mirror 53 is disposed on the second surface 50b of the second protruding portion 152. The second housing portion 542 houses the mirror 53 disposed on the second surface 50b of the wavelength conversion member 50.

The third housing portion 543 is a recessed portion that communicates with the +Z direction side of the first housing portion 541. The third housing portion 543 houses the position restriction unit 65, which holds the +Z side of the first protruding portion 151 of the wavelength conversion member 50, which is housed in the first housing portion 541.

The fourth housing portion 544 is a recessed portion that communicates with the -Z direction side of the first housing portion 541. The fourth housing portion 544 houses the position restriction unit 65, which holds the -Z side of the first protruding portion 151 of the wavelength conversion member 50, which is housed in the first housing portion 541.

The fifth housing portion 545 is a recessed portion that communicates with the +Z direction side of the second housing portion 542. The fifth housing portion 545 houses the position restriction unit 65, which holds the +Z side of the second protruding portion 152 of the wavelength conversion member 50, which is housed in the second housing portion 542.

The sixth housing portion 546 is a recessed portion that communicates with the -Z direction side of the third housing portion 543. The sixth housing portion 546 houses the position restriction unit 65, which holds the -Z side of the second protruding portion 152 of the wavelength conversion member 50, which is housed in the second housing portion 542.

The position restriction unit 65 holds the first protruding portion 151 or the second protruding portion 152 protruding from the support groove 154 of the support member 54, and regulates the position of the first protruding portion 151 or the second protruding portion 152 with respect to the support groove 154. The position restriction unit 65 includes a pair of restriction members 651, 652 which hold the first protruding portion 151, and a pair of restriction members 653, 654 which hold the second protruding portion 152.

The restriction member 651 as one of the restriction members 651, 652 which hold the first protruding portion 151 is fixed to the third housing portion 543 with a screw 97, and the restriction member 652 as the other of the restriction members 651, 652 is fixed to the fourth housing portion 544 with another screw 97. The restriction member 653 as one of the restriction members 653, 654 which hold the second protruding portion 152 is fixed to the fifth housing portion 545 with another screw 97, and the restriction member 654 as the other of the restriction members 653, 654 is fixed to the sixth housing portion 546 with another screw 97.

Note that the positions of the pair of restriction members 651, 652 in the Z-axis direction are made adjustable by an adjustment mechanism not shown. Similarly, the positions of the pair of restriction members 653, 654 in the Z-axis direction are made adjustable by an adjustment mechanism not shown.

In this way, the wavelength conversion member 50 in the present embodiment is held in the support groove 154 in a state in which the movement in the Z-axis direction in the first protruding portion 151 and the second protruding portion 152 which protrude outside the support groove 154 is restricted by the position restriction unit 65.

As described above, the light source device 100 according to the present embodiment includes the light source unit 70 including the plurality of light emitting elements 72 including the first light emitting element 11 and the second light emitting element 12 that emit the excitation light E, the substrate 71 on which the plurality of light emitting elements 72 arranged along the X axis are mounted, the first metal wires 74a that electrically couple the first light emitting element 11 and the first wiring terminals 75a of the substrate 71 to each other, and the second metal wires 74b that electrically couple the second light emitting element 12 and the second wiring terminals 75b of the substrate 71, the wavelength conversion member 50 that has an elongated shape along the X axis and on which the excitation light E emitted from the first light emitting element 11 and the second light emitting element 12 is incident, and the support member 54 including the support groove 154 that supports the wavelength conversion member 50.

The wavelength conversion member 50 has the first surface 50a that emits the excitation light E, the second surface 50b located at the opposite side to the first surface 50a in the direction along the X axis, the third surface 50c and the fourth surface 50d that cross the first surface 50a and the second surface 50b and are located at the respective sides opposite to each other, and the fifth surface 50e and the sixth surface 50f that cross the first surface 50a and the second surface 50b and cross the third surface 50c and the fourth surface 50d and are located at respective sides opposite to each other.

The light source unit 70 is disposed so that the first light emitting element 11 and the second light emitting element 12 are opposed to the third surface 50c of the wavelength conversion member 50, and the support groove 154 of the support member 54 has a support surface 154s that is opposed to the fourth surface 50d and supports the wavelength conversion member 50, and a first wall surface 154a that crosses the support surface 154s and is separated from the fifth surface 50e of the wavelength conversion member 50.

When an axis orthogonal to the X axis in the X-Z plane parallel to the support surface 154s is defined as the Z axis and an axis orthogonal to the X axis and the Z axis is defined as the Y axis, in a plan view in a direction along the Y axis, the first light emitting element 11 and the second light emitting element 12 each have a rectangular outer shape, the outer circumferential sides 11L, 12L of the first light emitting element 11 and the second light emitting element 12 cross the X axis and the Z axis, the first wiring terminal 75a and the second wiring terminal 75b are located between the fifth surface 50e and the first wall surface 154a, and in a plan view in a direction along the X axis, the first wall surface 154a extends toward the light source unit 70 beyond the third surface 50c of the wavelength conversion member 50.

According to the light source device 100 in the present embodiment, since the metal wires 74 can be fitted in the support groove 154 in the Z-axis direction, the gap S between the substrate 71 and the first side wall 141 and the second side wall 142 of the support member 54 can be reduced. Accordingly, it is possible to prevent the leakage of the excitation light E emitted from each of the light emitting elements 72 of the light source unit 70 through the gap S between the substrate 71 and the support member 54. Therefore, since the excitation light E can be efficiently incident on the wavelength conversion member 50, the light use efficiency of the excitation light E emitted from the light source unit 70 can be increased.

Since the projector 1 according to the present embodiment includes the light source device 100 that efficiently extracts the bright fluorescence Y from the wavelength conversion member 50, it is possible to provide a projector which is excellent in light use efficiency.

Note that the technical scope of the present disclosure is not limited to the embodiment described above, and various modifications can be made therein without departing from the spirit and scope of the present disclosure.

### First Modified Example

In the light source unit 70 of the embodiment described above, the configuration in which the metal wires 74 are drawn from both sides of each of the light emitting elements 72 is cited as an example, but the configuration of the light source unit in the present disclosure is not limited thereto.

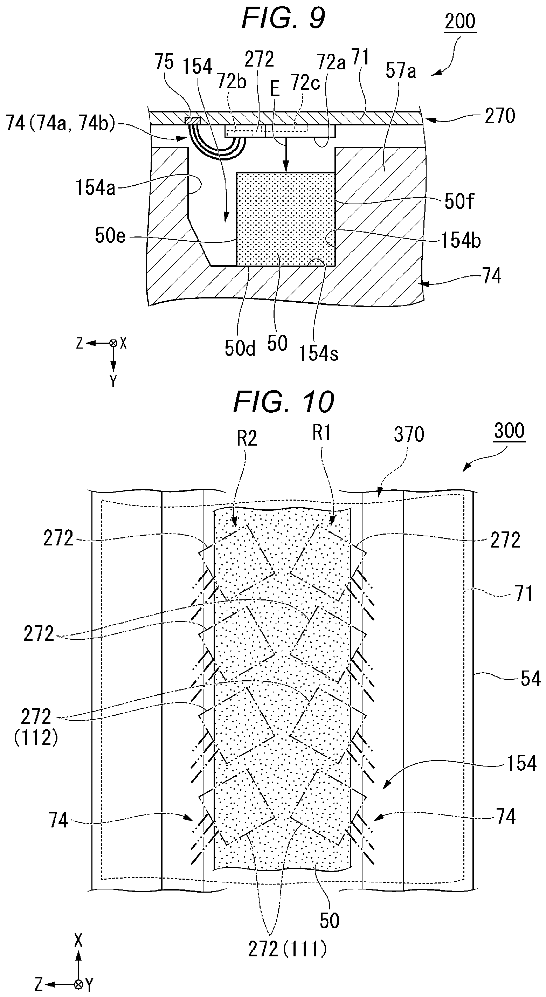

FIG. 9 is a cross-sectional view of a light source device 200 according to the present modified example.

As shown in FIG. 9, the light source device 200 in the present modified example has a light source unit 270. The light source unit 270 includes the substrate 71 and a plurality of light emitting elements 272 mounted on the substrate 71. The light emitting elements 272 each include the light emitting surface 72a, a single anode electrode 72b, and a single cathode electrode 72c. In the present modified example, each of the light emitting elements 272 has a configuration different from that of each of the light emitting elements 72 of the embodiment described above in that the single anode electrode 72b is disposed at one side of the light emitting surface 72a.

The anode electrode 72b of each of the light emitting elements 272 in the present modified example has a band shape extending along one side of the light emitting surface 72a having a rectangular shape. According to each of the light emitting elements 272 of the present modified example, a plurality of (three in FIG. 9) metal wires 74 can be used when the anode electrode 72b and the substrate 71 are electrically coupled to each other. In the present modified example, the metal wires 74 are drawn from the light emitting element 272 toward the first wall surface 154a, but are not drawn toward the second wall surface 154b of the light emitting element 272.

For example, when any two of the plurality of light emitting elements 272 are defined as a first light emitting element 111 and a second light emitting element 112, the first metal wires 74a are drawn from the first light emitting element 111 toward the first wall surface 154a and are not drawn toward the second wall surface 154b. Further, the second metal wires 74b are drawn from the second light emitting element 112 toward the first wall surface 154a but are not drawn toward the second wall surface 154b.

According to the light source unit 270 in the present modified example, since the current can be supplied to the light emitting surface 72a of each of the light emitting elements 272 via the three metal wires 74, the density of the current to be supplied to the light emitting surface 72a stabilizes, and thus, it is possible to homogenously emit the excitation light E from the light emitting surface 72a. Accordingly, it is possible for each of the light emitting elements 272 to emit the homogenous and bright excitation light E from the light emitting surface 72a.

In the light source device 200 according to the present modified example, since the metal wire 74 is not disposed at the second side wall 142 side, contact between the metal wire 74 and the second side wall 142 does not occur. Therefore, the distance between the sixth surface 50f of the wavelength conversion member 50 and the second wall surface 154b can be made smaller than the distance between the fifth surface 50e and the first wall surface 154a. In the case of the present modified example, the second wall surface 154b is in contact with the sixth surface 50f of the wavelength conversion member 50. Therefore, by reducing the width in the Z-axis direction of the support groove 154, the excitation light E emitted from each of the light emitting elements 272 can be efficiently incident on the wavelength conversion member 50.

Further, since the wavelength conversion member 50 is in contact with the sixth surface 50f in addition to the support surface 154s, the contact area between the wavelength conversion member 50 and the support groove 154 can be increased compared to that in the configuration of the embodiment described above. Therefore, a cooling performance of the wavelength conversion member 50 can be enhanced by efficiently releasing heat from the wavelength conversion member 50 toward the support member 54.

Note that in the present modified example, when the second wall surface 154b is in contact with the sixth surface 50f of the wavelength conversion member 50 is cited as an example, but the second wall surface 154b and the sixth surface 50f may be disposed at a distance smaller than the distance between the fifth surface 50e and the first wall surface 154a.

### Second Modified Example

In the embodiment described above, when the light source unit includes just one light emitting element array in which the plurality of light emitting elements 72 is arranged is cited as an example, but the present disclosure can also be applied to a light source device provided with a light source unit including two light emitting element arrays.

FIG. 10 is a plan view of a light source device 300 according to the present modified example viewed from the Y-axis direction.

As shown in FIG. 10, the light source device 300 in the present modified example has a light source unit 370. The light source unit 370 includes the substrate 71, and a first light emitting element array R1 and a second light emitting element array R2 mounted on the substrate 71. The first light emitting element array R1 is formed of a plurality of light emitting elements 272 including the first light emitting element 111 and the second light emitting element 112. The plurality of light emitting elements 272 has the same configuration as in the light source unit 270 of the first modified example.

The second light emitting element array R2 is formed of a plurality of light emitting elements 272 including the first light emitting element 111 and the second light emitting element 112, and is disposed adjacent to the first light emitting element array R1 in the Z-axis direction. The first light emitting element array R1 and the second light emitting element array R2 are arranged so as to be line-symmetric to each other about an axis along the X axis.

In the light source unit 370 of the present modified example, the first conduction parts 75 that couple the light emitting elements 272 and the metal wires 74 are disposed at the obverse surface 71a side of the substrate 71 so as to respectively be located at both sides of the first light emitting element array R1 and the second light emitting element array R2 in the Z-axis direction.

Therefore, in the light source unit 370 of the present modified example, the drawing direction of the metal wires 74 in the first light emitting element array R1 and the drawing direction of the metal wires 74 in the second light emitting element array R2 are opposite to each other in the Z-axis direction. As shown in FIG. 10, the drawing direction of the metal wires 74 from each of the light emitting elements 272 in the first light emitting element array R1 is the +Z side, and the drawing direction of the metal wires 74 from each of the light emitting elements 272 in the second light emitting element array R2 is the -Z side.

In the light source device 300 according to the present modified example, the metal wires 74 drawn from the first light emitting element array R1 and the second light emitting element array R2 can be fitted in the support groove 154 in the Z-axis direction. Therefore, even when using the light source unit 370 including two light emitting element arrays, the excitation light E emitted from the light source unit 370 can be efficiently incident on the wavelength conversion member 50.

The light emitting elements 72 are disposed in a state of being rotated in the same direction by the same angle in the embodiment described above, but may be disposed in a state of being rotated in respective directions different from each other by respective angles different from each other.

Further, in the embodiment described above, the substrate 71 of the light source unit 70 and the support member 54 are disposed at a distance from each other, but the substrate 71 and the top surfaces 55a, 57a of the first side wall 141 and the second side wall 142 of the support member 54 may be in contact with each other.

Further, in the embodiment described above, the CPC is used as the angle conversion member, but instead of the CPC, a tapered rod having a truncated quadrangular pyramid shape in which the area of the exit end surface is larger than the area of the end plane of incidence may be used.

Further, in the embodiment described above, an example of applying the present disclosure to the light source device equipped with the wavelength conversion member is cited, but it is possible to apply the present disclosure to a light source device in which the incident light is propagated without accompanying the wavelength conversion member, and is then emitted with, for example, the angle distribution controlled instead of the configuration described above. In this case, the wavelength conversion member in the embodiment described above is replaced with a light guide member, and the light emitted from the light emitting elements exits out of the angle conversion member as light having the same wavelength band.

In addition, the specific description of the shapes, the numbers, the arrangements, the materials, and the like of the elements of the light source device and the projector are not limited to those in the embodiment described above, but can be modified as appropriate. Further, in the embodiment described above, the example in which the light source device according to the present disclosure is installed in the projector using the liquid crystal panels is shown, but this is not a limitation. The light source device according to the present disclosure may be applied to a projector using digital micromirror devices as the light modulation devices. Further, the projector is not required to include the plurality of light modulation devices and may include just a single light modulation device.

In the embodiment described above, the example in which the light source device according to the present disclosure is applied to the projector is shown, but this is not a limitation. The light source device according to the present disclosure may be applied to a lighting apparatus, a headlight of an automobile, and so on.

### Summary of Present Disclosure

The present disclosure will be summarized below as appendices.

### Appendix 1

A light source device including
a light source unit including a first light emitting element and a second light emitting element configured to emit light, a substrate on which the first light emitting element and the second light emitting element arranged along a first axis are mounted, a first metal wire configured to electrically couple the first light emitting element and a first wiring terminal of the substrate, and a second metal wire configured to electrically couple the second light emitting element and a second wiring terminal of the substrate,
a light guide member which has an elongated shape along the first axis and on which the light emitted from the first light emitting element and the second light emitting element is incident, and
a support member having a support groove configured to support the light guide member, wherein
the light guide member includes a first surface configured to emit light, a second surface located at an opposite side to the first surface in a direction along the first axis, a third surface and a fourth surface which cross the first surface and the second surface and are located at respective sides opposite to each other, and a fifth surface and a sixth surface which cross the first surface and the second surface, which cross the third surface and the fourth surface, and which are located at respective sides opposite to each other,
the light source unit is disposed such that the first light emitting element and the second light emitting element are opposed to the third surface of the light guide member,
the support groove of the support member includes
a support surface which is opposed to the fourth surface, and is configured to support the light guide member, and
a first wall surface which crosses the support surface, and is located at a distance from the fifth surface of the light guide member,
when an axis orthogonal to the first axis in a plane parallel to the support surface is defined as a second axis, and an axis orthogonal to the first axis and the second axis is defined as a third axis,
in a plan view in a direction along the third axis,
the first light emitting element and the second light emitting element each have a rectangular outer shape, outer circumferential lines of the first light emitting element and the second light emitting element cross the first axis and the second axis,
the first wiring terminal and the second wiring terminal are located between the fifth surface and the first wall surface, and
in a plan view in a direction along the first axis,
the first wall surface extends toward the light source unit beyond the third surface of the light guide member.

According to the light source device having this configuration, since the metal wires are fitted in the gap between the first wall surface and the fifth surface of the light guide member in the second axis direction, the substrate and the first side wall of the support member can be disposed close to each other. Therefore, since the gap between the substrate and the first side wall of the support member is reduced, leakage of the light emitted from each of the light emitting elements of the light source unit through the gap between the substrate and the support member can be suppressed. Therefore, since the light can be efficiently incident on the light guide member, the use efficiency of the light emitted from the light source unit can be increased.

### Appendix 2

The light source device according to Appendix 1, wherein
in a plan view in a direction along the third axis,
at least a part of a first electrode of the first light emitting element to which the first metal wire is coupled and at least a part of a second electrode of the second light emitting element to which the second metal wire is coupled overlap the light guide member.

According to this configuration, since the first light emitting element and the second light emitting element are disposed in a sufficiently rotated state, the distance in the second axis direction between the first wiring terminal and the second wiring terminal electrically coupled to the light emitting elements can be shortened. Therefore, it is possible to make it easy to realize a configuration in which the metal wires are fitted in the gap between the first wall surface and the fifth surface in the second axis direction.

### Appendix 3

The light source device according to Appendix 1 or 2, wherein
the support groove further includes a second wall surface that crosses the support surface and is located at a distance from the sixth surface of the light guide member,
in a plan view in a direction along the third axis,
the first wiring terminal and the second wiring terminal are located between the sixth surface and the second wall surface, and
in a plan view in a direction along the first axis,
the second wall surface extends toward the light source unit beyond the third surface of the light guide member.

According to this configuration, since the metal wires are fitted in the gap between the second wall surface and the sixth surface of the light guide member in the second axis direction, the substrate and the second side wall of the support member can be disposed close to each other.

### Appendix 4

The light source device according to Appendix 3, wherein
in a plan view in a direction along the third axis,
the first metal wires are respectively drawn in a direction in which a distance between an outer circumferential side of the first light emitting element and the first wall surface increases, and in a direction in which a distance between an outer circumferential side of the first light emitting element and the second wall surface increases, and
the second metal wires are respectively drawn in a direction in which a distance between an outer circumferential side of the second light emitting element and the first wall surface increases, and in a direction in which a distance between an outer circumferential side of the second light emitting element and the second wall surface increases.

According to this configuration, since it becomes easy to ensure a space between the first metal wire and the second metal wire and the first wall surface or the second wall surface, it is possible to prevent contact between each of the metal wires and the first wall surface or the second wall surface. Therefore, the length of each of the metal wires can be sufficiently ensured.

### Appendix 5

The light source device according to any one of Appendices 1 to 4, wherein
the support groove further includes a second wall surface which crosses the support surface and is opposed to the sixth surface of the light guide member,
the first metal wire is drawn from the first light emitting element toward the first wall surface but is not drawn from the first light emitting element toward the second wall surface,
the second metal wire is drawn from the second light emitting element toward the first wall surface but is not drawn from the second light emitting element toward the second wall surface, and
a distance between the sixth surface and the second wall surface is smaller than a distance between the fifth surface and the first wall surface.

According to this configuration, since the metal wire is not provided at the second wall surface side, contact between the metal wire and the second wall surface does not occur, and the distance between the sixth surface of the light guide member and the second wall surface can be reduced. Therefore, by reducing the width in the second axis direction of the support groove, light emitted from each of the light emitting elements can be efficiently incident on the light guide member.

### Appendix 6

The light source device according to Appendix 5, wherein
the second wall surface is in contact with the sixth surface of the light guide member.

According to this configuration, the contact area between the light guide member and the support groove can be increased. Therefore, it is possible to improve the cooling performance of the light guide member by efficiently releasing heat from the light guide member to the support member.

### Appendix 7

The light source device according to any one of Appendices 1 to 6, wherein
the light source unit includes a first light emitting element array including the first light emitting element and the second light emitting element, and a second light emitting element array which includes the first light emitting element and the second light emitting element and is disposed adjacent to the first light emitting element array in a direction along the second axis, and
a drawing direction of the metal wire in the first light emitting element array and a drawing direction of the metal wire in the second light emitting element array are opposite to each other in the direction along the second axis.

According to this configuration, the metal wires drawn from the first light emitting element array and the second light emitting element array can be fitted in the support groove in the second axis direction.

### Appendix 8

The light source device according to any one of Appendices 1 to 7, wherein
the first wall surface includes a first portion located at the third surface side and a second portion located at the support surface side, the first portion extends in a direction perpendicular to the support surface, and the second portion is inclined so as to approach the fifth surface as extending from the first portion toward the support surface.

According to this configuration, a part of the light emitted from the light emitting element travels through the gap between the third surface of the light guide member and the first portion, and is then incident on the second portion which inclines with respect to the support surface. On this occasion, the light is reflected by the second portion and is incident on the third surface of the light guide member. As described above, the light passing through the gap between the third surface of the light guide member and the first wall surface is readily incident on the third surface, so that the amount of light reflected by the support surface and returning toward the light emitting element can be reduced. Further, a part of the light is reflected by the first portion, which extends in a direction perpendicular to the support surface, and is incident on the third surface of the light guide member.

Therefore, it is possible to realize the light source device which is high in light use efficiency and easily obtains the light having a predetermined intensity.

### Appendix 9

The light source device according to any one of Appendices 1 to 8, wherein
in a plan view in a direction along the third axis,
the first light emitting element and the second light emitting element have a same outer shape, and are disposed in a state of being rotated in a same direction and by a same angle about a central axis along the third axis.

According to this configuration, the arrangement space of the light emitting element on the substrate can be reduced.

### Appendix 10

The light source device according to any one of Appendices 1 to 9, wherein
in a plan view in a direction along the first axis,
at least a part of the first metal wire and the second metal wire is located closer to the light guide member than an opening surface of the support groove in the support member.

According to this configuration, the light source unit and the support member can be disposed in a state of being located adjacent to each other. Therefore, since the gap between the substrate and the support member is reduced, light leakage through the gap can be reduced.

### Appendix 11

The light source device according to any one of Appendices 1 to 10, wherein
the first light emitting element and the second light emitting element are configured to emit first light having a first wavelength band, and
the light guide member is a wavelength conversion member that includes a phosphor, and is configured to convert the first light emitted from the first light emitting element and the second light emitting element into second light having a second wavelength band different from the first wavelength band to emit the second light.

According to this configuration, it is possible to realize the light source device capable of emitting the second light obtained by performing the wavelength conversion on the first light.

### Appendix 12

A projector including
the light source device according to any one of Appendices 1 to 11,
a light modulation device configured to modulate the light output from the light source device in accordance with image information, and
a projection optical device configured to project the light modulated by the light modulation device.

According to the projector having this configuration, it is possible to provide a projector capable of projecting an image having excellent display quality.

## Claims

1. A light source device comprising:
a light source unit including a first light emitting element and a second light emitting element configured to emit light, a substrate on which the first light emitting element and the second light emitting element arranged along a first axis are mounted, a first metal wire configured to electrically couple the first light emitting element and a first wiring terminal of the substrate, and a second metal wire configured to electrically couple the second light emitting element and a second wiring terminal of the substrate;
a light guide member which has an elongated shape along the first axis and on which the light emitted from the first light emitting element and the second light emitting element is incident; and
a support member having a support groove configured to support the light guide member, wherein
the light guide member includes a first surface configured to emit light, a second surface located at an opposite side to the first surface in a direction along the first axis, a third surface and a fourth surface which cross the first surface and the second surface and are located at respective sides opposite to each other, and a fifth surface and a sixth surface which cross the first surface and the second surface, which cross the third surface and the fourth surface, and which are located at respective sides opposite to each other,
the light source unit is disposed such that the first light emitting element and the second light emitting element are opposed to the third surface of the light guide member,
the support groove of the support member includes
a support surface which is opposed to the fourth surface, and is configured to support the light guide member, and
a first wall surface which crosses the support surface, and is located at a distance from the fifth surface of the light guide member,
when an axis orthogonal to the first axis in a plane parallel to the support surface is defined as a second axis, and an axis orthogonal to the first axis and the second axis is defined as a third axis,
in a plan view in a direction along the third axis,
the first light emitting element and the second light emitting element each have a rectangular outer shape, outer circumferential lines of the first light emitting element and the second light emitting element cross the first axis and the second axis,
the first wiring terminal and the second wiring terminal are located between the fifth surface and the first wall surface, and
in a plan view in a direction along the first axis,
the first wall surface extends toward the light source unit beyond the third surface of the light guide member.

2. The light source device according to claim 1, wherein
in a plan view in a direction along the third axis,
at least a part of a first electrode of the first light emitting element to which the first metal wire is coupled and at least a part of a second electrode of the second light emitting element to which the second metal wire is coupled overlap the light guide member.

3. The light source device according to claim 1, wherein
the support groove further includes a second wall surface that crosses the support surface and is located at a distance from the sixth surface of the light guide member,
in a plan view in a direction along the third axis,
the first wiring terminal and the second wiring terminal are located between the sixth surface and the second wall surface, and
in a plan view in a direction along the first axis,
the second wall surface extends toward the light source unit beyond the third surface of the light guide member.

4. The light source device according to claim 3, wherein
in a plan view in a direction along the third axis,
the first metal wires are respectively drawn in a direction in which a distance between an outer circumferential side of the first light emitting element and the first wall surface increases, and in a direction in which a distance between an outer circumferential side of the first light emitting element and the second wall surface increases, and
the second metal wires are respectively drawn in a direction in which a distance between an outer circumferential side of the second light emitting element and the first wall surface increases, and in a direction in which a distance between an outer circumferential side of the second light emitting element and the second wall surface increases.

5. The light source device according to claim 1, wherein
the support groove further includes a second wall surface which crosses the support surface and is opposed to the sixth surface of the light guide member,
the first metal wire is drawn from the first light emitting element toward the first wall surface but is not drawn from the first light emitting element toward the second wall surface,
the second metal wire is drawn from the second light emitting element toward the first wall surface but is not drawn from the second light emitting element toward the second wall surface, and
a distance between the sixth surface and the second wall surface is smaller than a distance between the fifth surface and the first wall surface.

6. The light source device according to claim 5, wherein
the second wall surface is in contact with the sixth surface of the light guide member.

7. The light source device according to claim 1, wherein
the light source unit includes a first light emitting element array including the first light emitting element and the second light emitting element, and a second light emitting element array which includes the first light emitting element and the second light emitting element and is disposed adjacent to the first light emitting element array in a direction along the second axis, and
a drawing direction of the metal wire in the first light emitting element array and a drawing direction of the metal wire in the second light emitting element array are opposite to each other in the direction along the second axis.

8. The light source device according to claim 1, wherein
the first wall surface includes a first portion located at the third surface side and a second portion located at the support surface side, the first portion extends in a direction perpendicular to the support surface, and the second portion is inclined so as to approach the fifth surface as extending from the first portion toward the support surface.

9. The light source device according to claim 1, wherein
in a plan view in a direction along the third axis,
the first light emitting element and the second light emitting element have a same outer shape, and are disposed in a state of being rotated in a same direction and by a same angle about a central axis along the third axis.

10. The light source device according to claim 1, wherein
in a plan view in a direction along the first axis,
at least a part of the first metal wire and the second metal wire is located closer to the light guide member than an opening surface of the support groove in the support member.

11. The light source device according to claim 1, wherein
the first light emitting element and the second light emitting element are configured to emit first light having a first wavelength band, and
the light guide member is a wavelength conversion member that includes a phosphor, and is configured to convert the first light emitted from the first light emitting element and the second light emitting element into second light having a second wavelength band different from the first wavelength band to emit the second light.

12. A projector comprising:
the light source device according to claim 1;
a light modulation device configured to modulate the light output from the light source device in accordance with image information; and
a projection optical device configured to project the light modulated by the light modulation device.
